(19) Europäisches Patentamt
European Patent Office
Office européen des brevets

(11) **EP 1 687 193 B1**

(12) **EUROPÄISCHE PATENTSCHRIFT**

(45) Veröffentlichungstag und Bekanntmachung des Hinweises auf die Patenterteilung:
**10.01.2018  Patentblatt 2018/02**

(21) Anmeldenummer: **04798205.3**

(22) Anmeldetag: **15.11.2004**

(51) Int Cl.:
*B62D 6/00* (2006.01)    *B60T 8/00* (2006.01)
*B60T 8/174* (2006.01)   *B60T 8/1755* (2006.01)

(86) Internationale Anmeldenummer:
**PCT/EP2004/052960**

(87) Internationale Veröffentlichungsnummer:
**WO 2005/047086 (26.05.2005 Gazette 2005/21)**

(54) **VERFAHREN UND VORRICHTUNG ZUM REGELN DER FAHRDYNAMIK EINES FAHRZEUGS**

METHOD AND DEVICE FOR CONTROLLING THE DRIVING DYNAMICS OF A VEHICLE

PROCEDE ET DISPOSITIF DE REGLAGE DE LA DYNAMIQUE D'UN VEHICULE

(84) Benannte Vertragsstaaten:
**DE FR**

(30) Priorität: **14.11.2003  DE 10353550**
**18.05.2004  DE 102004024545**

(43) Veröffentlichungstag der Anmeldung:
**09.08.2006  Patentblatt 2006/32**

(73) Patentinhaber: **Continental Teves AG & Co. oHG**
**60488 Frankfurt (DE)**

(72) Erfinder:
• **SCHWARZ, Ralf**
**69118 Heidelberg (DE)**
• **FRITZ, Stefan**
**64390 Erzhausen (DE)**
• **BAUER, Urs**
**65934 Frankfurt am Main (DE)**
• **REUTER, Manfred**
**35789 Weilmünster (DE)**
• **MUNTU, Matthias**
**60486 Frankfurt am Main (DE)**

(56) Entgegenhaltungen:
**DE-A1- 4 120 069     DE-A1- 4 419 049**
**DE-A1- 10 130 659**

EP 1 687 193 B1

**Beschreibung**

Die vorliegende Erfindung betrifft ein Verfahren zum Regeln der Fahrdynamik eines Fahrzeugs, bei dem eine Lenkbewegung nach Maßgabe einer Stellgröße vorgenommen wird, die in Abhängigkeit einer Abweichung zwischen einem Sollwert und einem Istwert einer Fahrzustandsgröße berechnet wird.

Die Erfindung betrifft zudem eine Vorrichtung zum Regeln der Fahrdynamik eines Fahrzeugs mit einer Regeleinheit, die aufgrund der Abweichung eines erfassten Istwertes einer Fahrzustandsgröße von einem vorgegebenen Sollwert eine Stellgröße ermittelt, nach deren Maßgabe eine Lenkbewegung ausgeführt wird.

Aus der DE 41 20 069 A1 ist ein Verfahren bekannt, welches aufgrund der Eingabe des Fahreralters und Feststellen der Fahrertätigkeiten eine unscharfe logische Ableitung durchführt, um die Fahrercharakteristik abzuschätzen und demgemäß eine Regelungscharakteristik einzustellen.

Die DE 44 19 049 A1 beschreibt ein Verfahren, bei dem ein Lenkkraftunterstützungsanteil gemäß Fuzzy-Logik Regeln eingestellt wird. Dabei wird die Unterstützungskraft so gesteuert, dass die Lenkung bei niedrigen Fahrzeuggeschwindigkeiten leichtgängig und bei hohen Geschwindigkeiten schwergängig ist.

Das Verfahren in der DE 101 30 659 A1 sieht vor, die Fahrdynamik eines Fahrzeugs zu regeln, indem eine Fahrertyperkennung erfolgt und nach Maßgabe eines vom vom Fahrer vorgegebenen Lenkradwinkels abhängigen Betriebszustandes eine fahrerunabhängige Lenkbeeinflussung durchgeführt wird.

In Fahrzeugen eingesetzte ESP-Systeme zur Durchführung eines elektronischen Stabilitätsprogramms (ESP) gemäß dem Stande der Technik greifen zur Stabilisierung des Fahrzeugs in ein Bremsensystem und in ein Verbrennungsmotormanagement ein. Durch die Eingriffe werden dabei Giermomente erzeugt, die einem Über- oder Untersteuern des Fahrzeugs und störende Gierbewegungen des Fahrzeugs verursachenden Störmomenten entgegen wirken.

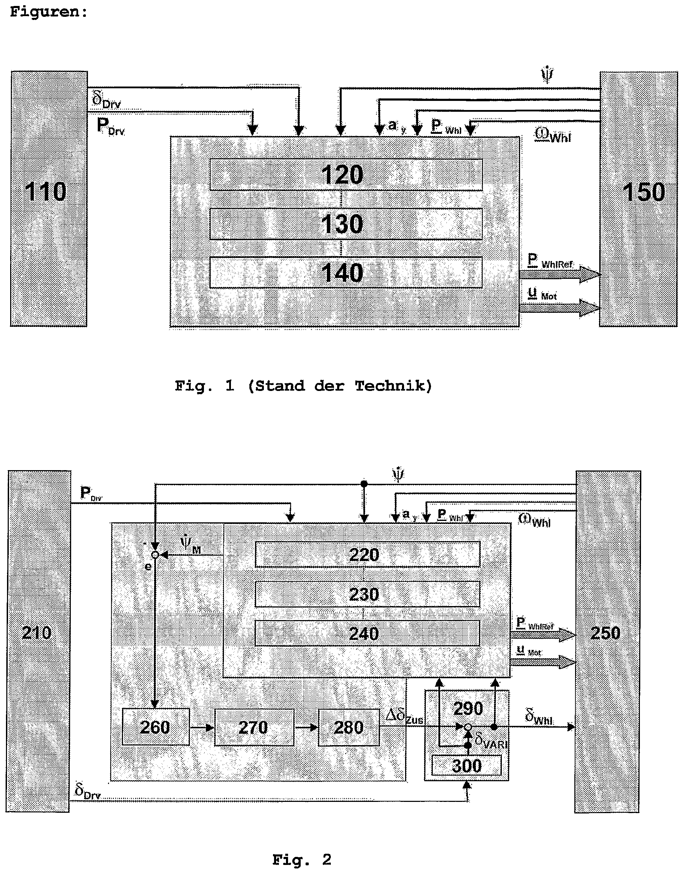

Ein Blockdiagramm eines solchen ESP-Systems ist in der Figur 1 gezeigt. Anhand eines von dem Fahrer 110 des Fahrzeugs 150 vorgegebenen Lenkwinkels $\delta_{Drv}$ wird dabei von einer Recheneinheit 120 unter Zugrundelegung eines Fahrzeugreferenzmodells ein Referenzwert $\dot{\psi}_M$ für die Gierrate des Fahrzeugs 150 ermittelt. Dieser Referenzwert $\dot{\psi}_M$ wird durch eine Regeleinheit 130 mit einem durch einen Gierratensensor erfassten Istwert $\dot{\psi}$ der Gierrate verglichen. Übersteigt die Differenz zwischen dem Istwert $\dot{\psi}$ und dem Referenzwert $\dot{\psi}_M$ einen vorgegebenen Schwellenwert, so werden in Abhängigkeit der Regelabweichung ein Satz $\underline{P}_{WhlRef}$ von radindividuellen Bremsdrücken und ein Motormoment $\underline{u}_{Mot}$ bestimmt und durch eine weitere Einheit 140 als Stellsignale an das Bremsensystem und das Verbrennungsmotormanagement des Fahrzeugs 150 übermittelt.

Bei dem Regeleingriff wird ebenfalls die aktuelle Fahrsituation berücksichtigt, die anhand weiterer Informationen berechnet wird. Diese Informationen umfassen beispielsweise den von dem Fahrer vorgegebenen Bremsdruck $P_{Drv}$, den Satz $\underline{\omega}_{Whl}$ der einzelnen Radgeschwindigkeiten, die Fahrzeugquerbeschleunigung $a_y$ und optional den Satz $\underline{P}_{whl}$ der radindividuellen Bremsdrücke und erlauben beispielsweise die Berechnung der Fahrzeuggeschwindigkeit.

Insbesondere der durch das ESP-System vorgenommene Bremseneingriff ist jedoch für den Fahrer als Fahrzeugverzögerung deutlich spürbar und kann deshalb aus Komfortgründen nur im fahrdynamisch kritischen Bereich angewendet werden. Im unterkritischen Handlingbereich sind die bremsenbasierten Stelleingriffe nur bedingt akzeptabel.

Die vorgenommenen Motoreingriffe gehen mit störenden Lenkkraftschwankungen einher und bieten darüber hinaus aufgrund ihrer eingeschränkten Dynamik prinzipbedingt gar nicht das Potential, den Fahrer im Handlingbereich wirkungsvoll unterstützen zu können.

Es wurde bereits vorgeschlagen, eine Gierratenregelung auf der Grundlage von Eingriffen in das Lenksystem eines Fahrzeugs durchzuführen und durch zusätzliche, die Lenkbewegung des Fahrers überlagernde Lenkbewegungen ein Giermoment zu erzeugen, das dem Über- oder Untersteuern entgegenwirkt sowie Störmomente kompensiert.

Eine auf Lenkeingriffen basierende Gierratenregelung besitzt dabei das Potenzial dafür, den Fahrer auch bei unkritischen Fahrmanövern zu unterstützen, und so das Handling sowie insbesondere die Agilität des Fahrzeugs zu verbessern.

Voraussetzung dafür ist jedoch, dass die zusätzlichen Lenkbewegungen von dem Fahrer des Fahrzeugs nicht als störend wahrgenommen werden.

Der Erfindung liegt daher die Aufgabe zugrunde, bei einer Fahrdynamikregelung vorgenommene Lenkeingriffe möglichst harmonisch auf Lenkbewegungen des Fahrers abzustimmen.

Erfindungsgemäß wird diese Aufgabe durch ein Verfahren nach dem Patentanspruch 1 gelöst.

Erfindungsgemäß wird diese Aufgabe zudem durch eine Vorrichtung nach dem Patentanspruch 5 gelöst.

Vorteilhafte Weiterbildungen des Verfahrens sind Gegenstand der Ansprüche 2 bis 4.

Weiterbildungen der Vorrichtung sind Gegenstand des Anspruchs 6.

Es ist dabei insbesondere vorgesehen, ein Verfahren zum Regeln der Fahrdynamik eines Fahrzeugs, bei dem eine Lenkbewegung nach Maßgabe einer Stellgröße vorgenommen wird so durchzuführen, dass wenigstens ein Zugehörigkeitsgrad eines erfassten Wertes eines von einem Fahrer eingestellten Lenkwinkels und/oder eines von dem Fahrer eingestellten Lenkwinkelgradienten zu einer vorgegebenen unscharfen Menge ermittelt wird und ein Wert der Stellgröße in Abhängigkeit des Zugehörigkeitsgrades verändert wird, wobei die Stellgröße (u) in Abhängigkeit einer Abweichung zwischen einem Sollwert und einem erfassten Istwert einer Fahrzustandsgröße nach der Zeitfunktion

$$u = K \cdot e + T_d \cdot \dot{e}$$

berechnet wird. Dabei stellt e die zeitliche Ableitung der Abweichung e dar.

Bei der Stellgröße handelt es sich vorzugsweise um einen Lenkwinkel, der mittels einer sog. Überlagerungslenkung zusätzlich zu dem von dem Fahrer vorgegebenen Lenkwinkel an einem lenkbaren Rad des Fahrzeugs eingestellt wird.

Die Erfindung ermöglicht es, die Lenkvorgaben des Fahrers bei der Generierung der zusätzlichen Lenkbewegung zu berücksichtigen und die Lenkeingriffe zur Regelung der Fahrdynamik für den Fahrer komfortabler zu gestalten. Hierdurch wird es möglich, Regeleingriffe auch in unkritischen Fahrsituationen vornehmen zu können und damit die Agilität des Fahrzeugs zu erhöhen.

Bei der Stellgröße handelt es sich vorzugsweise um einen Lenkwinkel, der mittels einer sog. Überlagerungslenkung zusätzlich zu dem von dem Fahrer vorgegebenen Lenkwinkel an einem lenkbaren Rad des Fahrzeugs eingestellt wird.

Regeleingriffe zur Verbesserung der Agilität eines Fahrzeugs sind dabei sowohl im Hinblick auf den Fahrspaß des Fahrers als auch im Hinblick auf die Fahrsicherheit sinnvoll und vorteilhaft:

Insbesondere bei Lenkvorgaben mit hohen Lenkwinkelgradienten reagiert das Fahrzeug aufgrund der elastischen Fahrwerkselemente sowie seiner Trägheit verzögert. Dies wird von dem Fahrer als indirektes Reaktionsverhalten und als Einbuße des Fahrspaßes empfunden. Bei Ausweichmanövern ist es zudem häufig zu beobachten, dass ein Fahrer aufgrund des verzögerten Fahrzeugfolgeverhaltens zu große Lenkwinkel einstellt, so dass die verzögerte Fahrzeugreaktion heftiger ausfällt, als der Fahrer es erwartet, und das Fahrzeug instabil werden kann.

Vorteilhaft können anhand des erfindungsgemäßen Verfahrens nun autonome Lenkeingriffe zur Verbesserung der Agilität und des Folgeverhaltens eines Fahrzeugs durchgeführt und harmonisch auf das Verhalten des Fahrers abgestimmt werden.

Ein erfindungsgemäßer Vorteil besteht dabei insbesondere darin, dass die Lenkbewegungen des Fahrers entsprechend seiner subjektiven Wahrnehmung als "starke" oder "schwache" Lenkbewegungen mit "kleinen" oder "großen" Lenkwinkeln und Lenkwinkelgradienten klassifiziert werden können.

Dies wird dadurch erreicht, dass die linguistischen Werte "klein" und "groß" durch unscharfe Mengen, sogenannte Fuzzy-Mengen, beschrieben werden. Die Zugehörigkeit eines

Wertes, beispielsweise eines Messwertes eines Lenkwinkelsensors zu einer Fuzzy-Menge, wird dabei durch den Zugehörigkeitsgrad des Wertes zu dieser Menge dargestellt, der sich als Funktionswert einer sogenannten Zugehörigkeitsfunktion ergibt und Werte aus dem Intervall [0,1] annimmt.

Im Rahmen umfangreicher Fahrversuche hat sich gezeigt, dass zusätzliche Lenkeingriffe mit betragsmäßig großen zusätzlichen Lenkwinkeln von dem Fahrer nicht toleriert werden, wenn er selbst gar nicht oder nur wenig über das Lenkrad in das Lenkgeschehen eingreift. Volle fahrdynamische Unterstützung seitens eines Fahrdynamikreglers muss dagegen in Fahrsituationen erfolgen, in denen der Fahrer erheblichen Lenkaufwand leistet.

Diesen Beobachtungen wird dadurch Rechnung getragen, dass die Stellgröße aufgrund einer Fuzzy-Regel verändert wird, derzufolge der Wert der Stellgröße verringert wird, wenn der Betrag des von dem Fahrer eingestellten Lenkwinkels und der Betrag des von dem Fahrer eingestellten Lenkwinkelgradienten "klein" sind.

Zweckmäßigerweise werden daher die Zugehörigkeitsgrade der erfassten Werte des von dem Fahrer eingestellten Lenkwinkels und des von dem Fahrer eingestellten Lenkwinkelgradienten zu einer Menge "kleiner" Lenkwinkel beziehungsweise "kleiner" Lenkwinkelgradienten bestimmt. Dies wird vorzugsweise anhand von geeigneten linksseitig beranderten Zugehörigkeitsfunktionen durchgeführt, durch die insbesondere dem Wert Null für den

Lenkwinkel beziehungsweise den Lenkwinkelgradienten der Zugehörigkeitsgrad Eins zugeordnet wird.

Die Konklusion der Fuzzy-Regel wird vorzugsweise dadurch realisiert, dass der Wert der Stellgröße mit einem geeignet aus den Zugehörigkeitsgraden gebildeten Faktor multipliziert wird, so dass keine Defuzzifizierung der Stellgröße vorgenommen werden muss.

Eine besonders gute Anpassung der zusätzlichen Lenkbewegung an das Lenkverhalten des Fahrers wird zudem erreicht, wenn auch bei geringen Werten des von ihm eingestellten Lenkwinkelgradienten, nicht jedoch bei geringen Lenkwinkeln, eine zusätzliche Lenkbewegung ausgeführt wird.

Daher ist es vorteilhaft vorgesehen, dass die Menge "kleiner" Lenkwinkel im Gegensatz zu der Menge "kleiner" Lenkwinkelgradienten keine Toleranz aufweist.

Eine weitere bevorzugte Durchführungsform des erfindungsgemäßen Verfahrens zeichnet sich dadurch aus, dass neben der Anpassung der Lenkeingriffe an das Lenkverhalten des Fahrers eine Anpassung an die Fahrzeuggeschwindigkeit durchgeführt wird.

Es wurde festgestellt, dass fahrdynamische Eingriffe in die Lenkung bei sehr "niedrigen" Geschwindigkeiten nahezu wirkungslos sind und daher unterbleiben können. Bei sehr "hohen" Geschwindigkeiten sind "geringe" Lenkbewegungen probat, um keine Instabilitäten des Fahrzeugs hervorzurufen.

In einer weiteren bevorzugten Durchführungsform des erfindungsgemäßen Verfahrens ist es daher vorgesehen, dass der Wert der Stellgröße in Abhängigkeit eines erfassten Wertes einer Fahrzeuggeschwindigkeit verändert wird.

Vorzugsweise wird dabei der Wert der Stellgröße insbesondere in Abhängigkeit des Zugehörigkeitsgrades des erfassten Wertes der Fahrzeuggeschwindigkeit zu einer Menge "mittlerer" Geschwindigkeiten verändert.

Durch eine geeignete Wahl der Zugehörigkeitsfunktion der Menge "mittlerer" Geschwindigkeiten kann dabei vorteilhaft erreicht werden, dass die zusätzliche Lenkbewegung vollständig unterdrückt wird, wenn der erfasste Wert der Fahrzeuggeschwindigkeit unterhalb eines ersten Grenzwertes oder oberhalb eines zweiten Grenzwertes liegt.

Neben dem beschriebenen Verfahren schafft die Erfindung zudem eine vorteilhafte Vorrichtung zur Durchführung des Verfahrens.

Die Vorrichtung zum Regeln der Fahrdynamik eines Fahrzeugs mit einer Regeleinheit, die aufgrund der Abweichung eines erfassten Istwerts einer Fahrzustandsgröße von einem vorgegebenen Sollwert eine Stellgröße ermittelt, nach deren Maßgabe eine Lenkbewegung ausgeführt wird, zeichnet sich insbesondere dadurch aus, dass sie eine Fuzzy-Logikeinheit zum Ermitteln des Zugehörigkeitsgrades eines Wertes des von dem Fahrer eingestellten Lenkwinkels zu einer unscharfen Menge "kleiner" Lenkwinkel und eines Zugehörigkeitsgrades eines von dem Fahrer eingestellten Lenkwinkelgradienten zu einer unscharfen Menge "kleiner" Lenkwinkelgradienten und zum Verändern eines Wertes der Stellgröße anhand einer Verknüpfung der Zugehörigkeitsgrade enthält.

In einer bevorzugten Ausgestaltung umfasst die Vorrichtung zudem eine Logikeinheit zum Ermitteln eines Zugehörigkeitsgrades eines erfassten Wertes der Fahrzeuggeschwindigkeit zu einer unscharfen Menge "mittlerer" Geschwindigkeiten und zum Verändern des Wertes der Stellgröße in Abhängigkeit dieses Zugehörigkeitsgrades.

Weitere Vorteile und zweckmäßige Weiterbildungen der Erfindung ergeben sich aus den Unteransprüchen der folgenden Beschreibung bevorzugter Ausführungsbeispiele anhand der Figuren.

Von den Figuren zeigt:

Fig. 1 Ein Blockdiagramm eines ESP-Systems nach dem Stande der Technik,

Fig. 2 ein Blockdiagramm eines ESP-Systems mit integrierter erfindungsgemäßer Vorrichtung,

Fig. 3a ein Diagramm mit dem zeitlichen Verlauf der Referenzgierrate und der Ist-Gierrate,

Fig. 3b ein weiteres Diagramm mit dem zeitlichen Verlauf der Referenzgierrate und der Ist-Gierrate,

Fig. 4 ein Blockdiagramm der erfindungsgemäßen Vorrichtung,

Fig. 5 die Zugehörigkeitsfunktion der Menge "mittlerer" Fahrzeuggeschwindigkeiten,

Fig. 6 ein Blockdiagramm einer Logikeinheit,

Fig. 7a ein Diagramm mit der Zugehörigkeitsfunktion der Menge "kleiner" Lenkwinkel,

Fig. 7b ein Diagramm mit der Zugehörigkeitsfunktion der Menge "kleiner" Lenkwinkelgradienten und

Fig. 8 ein Diagramm mit einer Hysteresekurve.

Das in der Figur 2 dargestellte Blockdiagramm eines ESP-Systems mit integrierter erfindungsgemäßer Vorrichtung weist übereinstimmend mit dem eingangs beschriebenen ESP-System nach dem Stand der Technik eine Einheit 220 zum Berechnen einer SollGierrate $\dot{\psi}_M$ einen Gierratenregler 230 zum Berechnen einer Stellgröße in Abhängigkeit des Ergebnisses des Vergleichs der Differenz der erfassten Ist-Gierrate $\dot{\psi}$ und der Sollgierrate $\dot{\psi}_M$ mit einem Schwellenwert und eine Einheit 240 zum Übertragen der Stellsignale $\underline{P}_{WhlRef}$ und $\underline{u}_{Mot}$ an das Bremsensystem und das Motormanagement des Fahrzeugs 250 auf.

Eingangsgrößen für das System sind ebenfalls der von einem Fahrer 210 vorgegebene Bremsdruck $P_{drv}$, der von dem Fahrer 210 vorgegebene Lenkwinkel $\delta_{Drv}$, die gemessene Ist-Gierrate $\dot{\psi}$ des Fahrzeugs 250, die gemessene Querbeschleunigung ay, der Satz $\underline{\omega}_{Whl}$ der Radgeschwindigkeiten und der Satz $\underline{P}_{Whl}$ der radindividuellen Bremsdrücke des Fahrzeugs 250.

Die bekannte Vorrichtung wird erfindungsgemäß durch die Regeleinheit 260, die Logikeinheiten 270 und 280 sowie eine Überlagerungslenkung 290 ergänzt. Die Ausgangsgrößen der erfindungsgemäß erweiterten Vorrichtung sind der Satz $\underline{P}_{WhlRef}$ der radindividuellen Bremsdrücke, das Motormoment $\underline{u}_{Mot}$ und zusätzlich ein an den lenkbaren Rädern des Fahrzeugs 250 bzw. ein vor dem Lenkgetriebe der Lenkung des Fahrzeugs 250 einzustellender Lenkwinkel $\delta_{Whl}$.

Durch die Überlagerungslenkung 290 wird die von dem Fahrer 210 des Fahrzeugs 250 initiierte Lenkbewegung mit einer zusätzlichen Lenkbewegung nach Maßgabe eines Zusatzlenkwinkel $\Delta\delta_{zus}$ überlagert.

Der vor einem Lenkgetriebe des Fahrzeugs 250, beispielsweise an einem Lenkritzel einer Zahnstangenlenkung auftretende Lenkwinkel $\delta_{Whl}$, ergibt sich dabei aus der Summe des von dem Fahrer vorgegebenen Lenkwinkels $\delta_{Drv}$ und des Zusatzlenkwinkels $\Delta\delta_{Zus}$ und

wird durch das Lenkgetriebe an die lenkbaren Räder des Fahrzeugs 250 übertragen. Dabei stellt das Lenkgetriebe eine Lenkübersetzung i zur Verfügung, so dass sich ein Lenkwinkel von $\delta_{Whl}/i$ an den lenkbaren Rädern des Fahrzeugs 250 ergibt.

Die Überlagerungslenkung 290 besitzt einen elektromechanischen Aktuator, der über ein Getriebe in den Lenkstrang einer konventionellen hydraulischen oder elektrischen Servolenkung eingreift. Bei dem Getriebe kann es sich beispielsweise um ein Planetengetriebe handeln, bei dem das Lenkritzel durch die Eingriffe des Aktuators gegenüber dem Lenkrad verdreht werden kann.

Zusätzliche Lenkbewegungen können jedoch ebenfalls in einem sogenannten Steer-by-Wire-Lenksystem erzeugt werden, bei dem eine mechanische Verbindung zwischen Lenkrad und Lenkgetriebe durch elektromechanische Verbindungen ersetzt ist. Ein derartiges Lenksystem eignet sich daher ebenfalls für einen Einsatz im Rahmen der Erfindung.

Darüber hinaus kann die Überlagerungslenkung 290 mit der Funktion einer frei wählbaren Lenkübersetzung i zwischen der Fahrervorgabe $\delta_{Drv}$ und dem Radeinschlagswinkel ausgerüstet sein.

Diese Funktion kann durch die Einheit 300 ausgeführt werden, um beispielsweise eine geschwindigkeitsabhängige Lenkübersetzung i zu realisieren, bei der im unteren Geschwindigkeitsbereich eine sehr direkte Übersetzung i eingestellt wird, um dem Fahrer das Manövrieren zu erleichtern, und im oberen Geschwindigkeitsbereich eine sehr indirekte Übersetzung gewählt wird, um einen störungsfreien Geradeauslauf des Fahrzeugs 250 zu gewährleisten.

Die Einheit 300 berechnet dafür den Lenkwinkel $\delta_{VARI} = ü_{VARI} \cdot \delta_{Drv}$ anhand eines geschwindigkeitsabhängigen Faktors $ü_{VARI}$ und überträgt diesen an den Aktuator der Überlagerungslenkung 290, der einen Lenkwinkel $\delta_{Whl}$ an dem Lenkgetriebe einstellt, welcher der Summe aus dem Lenkwinkel $\delta_{VARI}$ und dem Zusatzlenkwinkel $\Delta\delta_{Zus}$ entspricht.

Vorzugsweise geht die Erfindung von einem Fahrzeug 250 mit vier an zwei Achsen angeordneten Rädern aus. Lenkeingriffe können dabei sowohl an der Vorderachse als auch an der Hinterachse oder an beiden Achsen des Fahrzeugs 250 gleichzeitig vorgenommen werden.

Autonome Lenkeingriffe zur Verbesserung der Agilität eines Fahrzeugs 250 sind zur Erhöhung der Fahrsicherheit und des Fahrspaßes für den Fahrer 210 sinnvoll und verbessern das Fahrzeugfolgeverhalten, das insbesondere bei Lenkvorgaben mit großen Lenkwinkelgradienten $\dot{\delta}_{Drv}$ wegen der Elastizität von Fahrwerkelementen wie Reifen und Gummilagern sowie der Fahrzeugträgheit aufgrund der Trägheitsmomente bzgl. der Hoch- und Längsachse verzögert ist.

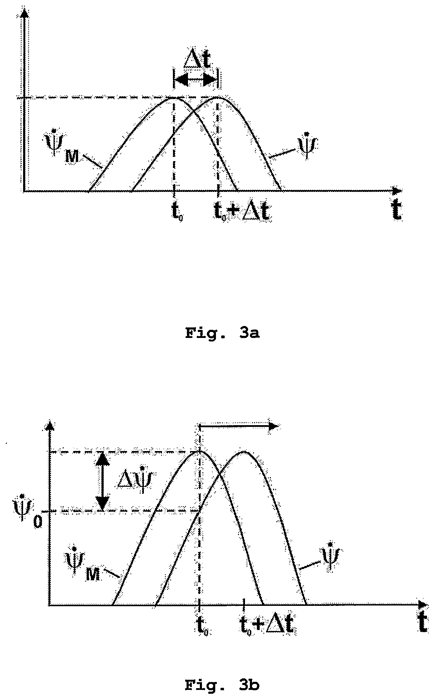

Eine dem durch den Fahrer 210 vorgegebenen Lenkwinkel $\delta_{Drv}$ entsprechende Soll- bzw. Wunsch-Fahrzeuggierrate $\dot{\psi}_M$ wird in dem Diagramm in der Figur 3a mit der verzögerten Fahrzeug-Istgierrate $\dot{\psi}$ verglichen.

Anhand der Figur wird dabei deutlich, dass ein Phasenverzug $\Delta t$ in der Fahrzeugreaktion besteht. Bezüglich der Agilität wird dies von dem Fahrer 210 des Fahrzeugs 250 als indirektes Reaktionsverhalten und damit als Einbuße beim Fahrspaß empfunden.

Der Phasenverzug $\Delta t$ in der Fahrzeugreaktion kann aber auch zu sicherheitskritischen Situationen führen. Muss ein Fahrer 210 zum Beispiel einem Hindernis schnell ausweichen, tendiert er in der Regel aufgrund des verzögerten Fahrzeugfolgeverhaltens zum "Überlenken", um zu einem Zeitpunkt $t_0$ am Fahrzeug 250 den gewünschten Wert $\dot{\psi}_0$ für die Gierrate $\dot{\psi}$ einzustellen. Tritt dann die volle sich infolge der Fahrervorgabe ergebende Fahrzeugreaktion zu der Zeit $t_0 + \Delta t$ ein, ist sie viel heftiger als der Fahrer es erwartet, so dass dieser oft die Kontrolle über das Fahrzeug verliert. In dem Diagramm in der Figur 3b ist dabei die Gierratenüberhöhung $\Delta\dot{\psi}$ gezeigt, die sich infolge eines "Überlenkens" ergibt.

Bei der vorstehend beschriebenen Vorrichtung zur Verbesserung des Fahrzeugfolgeverhaltens wird die innerhalb des ESP-Steuergerätes 220 in dem Fahrzeugreferenzmodell berechnete Sollgierrate $\dot{\psi}_M$, die sich aufgrund des von dem Fahrer 210 vorgegebenen Lenkwinkels $\delta_{Drv}$ für das Fahrzeug 250 ergeben sollte, zur Berechnung des Zusatzlenkwinkels $\Delta\delta_{Zus}$ übernommen.

Das Fahrzeugsollverhalten wird von einem Fahrzeughersteller entsprechend seiner Philosophie festgelegt und in Form von Softwareparametern in der Einheit 220 abgelegt.

Bei Durchführung der Fahrdynamikregelung wird das tatsächliche Fahrzeugfolgeverhalten während der Fahrt permanent durch einen Gierratensensor überwacht, der die aktuelle Fahrzeug-Istgierrate $\dot{\psi}$ ermittelt.

Abhängig von der Regelabweichung e zwischen Soll- und Istreaktion wird ein Zusatzlenkwinkel $\Delta\delta_{Zus}$ berechnet. Mittels der Überlagerungslenkung 290 wird dann die durch den Fahrer 210 des Fahrzeugs 250 initiierte Lenkbewegung mit einer zusätzlichen Lenkbewegung nach Maßgabe des Zusatzlenkwinkels $\Delta\delta_{Zus}$ überlagert, so dass sich vor dem Lenkgetriebe des Fahrzeugs ein Lenkwinkel $\delta_{Whl}$ ergibt, welcher der Summe des von dem Fahrer 210 eingestellten Lenkwinkels $\delta_{Drv}$ und des Zusatzlenkwinkels $\Delta\delta_{Zus}$ entspricht.

Falls eine variable, beispielsweise geschwindigkeitsabhängige, Lenkübersetzung im Systemverbund integriert ist, wird nicht der von dem Fahrer 210 eingestellte Lenkwinkel $\delta_{Drv}$, sondern der mit einem Übersetzungsfaktor $ü_{VARI}$ multiplizierter Wert $\delta_{VARI}$ mit dem Zusatzlenkwinkel $\Delta\delta_{Zus}$ addiert.

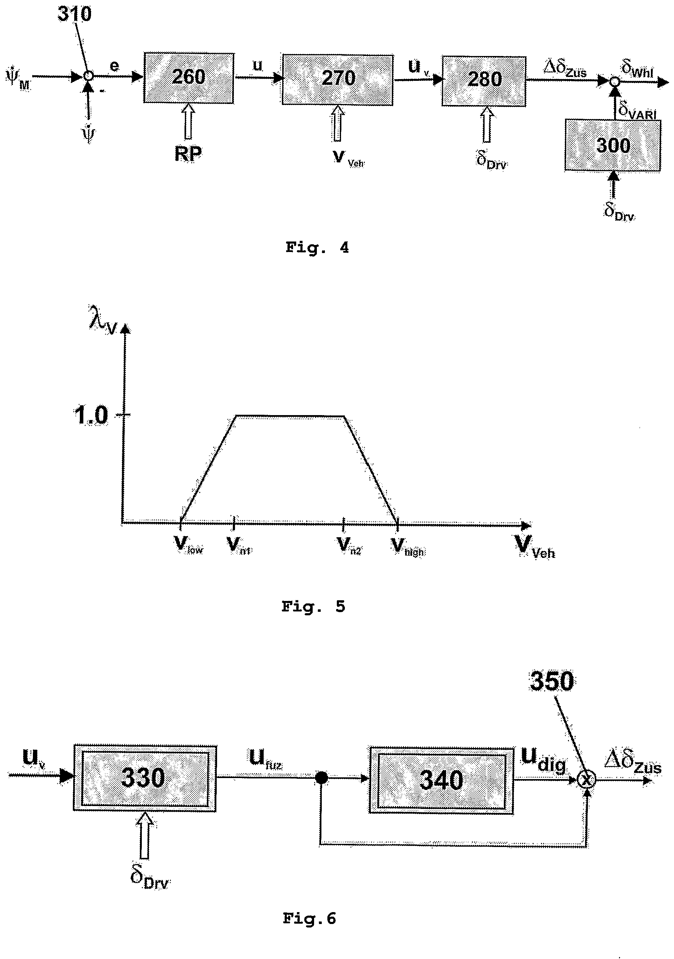

Zur Bestimmung des Zusatzlenkwinkels $\Delta\delta_{Zus}$ sind die drei Blöcke 260, 270 und 280 vorgesehen, die in der Figur 4 noch einmal dargestellt sind und im Folgenden genauer beschrieben werden.

Die Eingangsgröße der Einheit 260 ("Adaptive Controller") stellt die Regelabweichung e zwischen der Referenzgierrate $\dot{\psi}_M$ der gemessenen Fahrzeug-Istgier-

rate $\dot{\psi}$ dar, die als Differenz zwischen diesen beiden Größen durch einen Subtrahierer 310 berechnet wird. Die Einheit 260 beinhaltet einen Regler zum Berechnen einer Stellgröße u, bei dem es sich vorzugsweise um einen Portionalregler mit Differenzialanteil (PD-Regler) handelt.

Dieser berechnet die Stellgröße u gemäß der Zeitfunktion,

$$u = K \cdot e + T_d \cdot \dot{e}$$

wobei $\dot{e}$ die zeitliche Ableitung der Abweichung e darstellt.

Die Reglerparameter K und $T_d$ sind dabei nicht fest vorgegeben, sondern lassen sich durch einen Adaptionsmechanismus dem aktuellen Fahrzustand anpassen. Beispielsweise kommen unterschiedliche Reglerparametersätze RP für den unkritischen und den kritischen Fahrbereich zum Einsatz. Es kann ebenfalls eine Anpassung an den Beladungszustand des Fahrzeugs 250 vorgenommen werden.

Der nachfolgende Block 270 ("Consideration of vehicle velocity") passt das durch den Block 260 berechnete Stellsignal u an die aktuelle Fahrzeuggeschwindigkeit $v_{Veh}$ an, deren Wert aus den Messsignalen der Raddrehzahlsensoren bestimmt wird.

Es wurde festgestellt, dass fahrdynamische Eingriffe in die Lenkung bei sehr niedrigen Geschwindigkeiten nahezu wirkungslos sind und bei hohen Geschwindigkeiten reduziert werden müssen, um keine Instabilitäten des Fahrzeugs hervorzurufen.

Daher wird in einem ersten Schritt der Zugehörigkeitsgrad $\lambda_v$ des aktuellen Werts der Fahrzeuggeschwindigkeit $v_{veh}$ zu einer Menge "mittlerer" Geschwindigkeiten ermittelt. Die Zugehörigkeitsfunktion $\lambda_v$ als deren Funktionswerte sich die Zugehörigkeit $\lambda_v$ ergeben, ist in dem Diagramm in der Figur 5 dargestellt.

Es handelt sich dabei um eine trapezförmige Zugehörigkeitsfunktion $\lambda_v$: Liegt der Wert der Fahrzeuggeschwindigkeit $v_{Veh}$ unterhalb des Wertes $v_{low}$ oder oberhalb des Wertes $V_{high}$, so ergibt sich ein Zugehörigkeitsgrad von $\lambda_v = 0$. Die Parameter $v_{low}$ und $v_{high}$ nehmen dabei beispielsweise Werte von 30 km/h und 200 km/h an. Volle Zugehörigkeit mit dem Zugehörigkeitsgrad $\lambda_v = 1$ zu der Menge "mittlerer" Geschwindigkeiten liegt dagegen vor, wenn die Fahrzeuggeschwindigkeit $v_{Veh}$ Werte zwischen $v_{n1}$ und $v_{n2}$ annimmt.

Die vorgenannte Feststellung bezüglich der Wirksamkeit der Lenkeingriffe führt zu der Fuzzy-Regel "WENN die Fahrzeuggeschwindigkeit $v_{Veh}$ "klein" oder "groß" ist, DANN nimmt die Stellgröße u den Wert u = 0 an".

Die Konklusion der Regel wird in einem zweiten Schritt in einfacher Weise dadurch realisiert, dass das Stellsignal u mit dem in dem ersten Schritt ermittelten Zugehörigkeitsgrad $\lambda_v$ multipliziert wird. Ausgangsgröße der Einheit 270 ist somit das Signal $u_v$ mit

$$u_v = \lambda_v \cdot u$$

Das Signal $u_v$ wird dann durch die Einheit 280 ("Activation Logic") bearbeitet, die sich aus zwei nichtlinearen Blöcken 330 und 340 zusammensetzt und in dem Blockdiagramm in der Figur 6 veranschaulicht ist.

Der Block 330 gewichtet sein Eingangssignal $u_v$ entsprechend den Lenkaktivitäten des Fahrers 210 und generiert die kontinuierliche Zwischengröße $u_{fuz}$. Anhand einer nicht linearen Hysteresefunktion $u_{dig}$ wird in dem Block 340 dann ein digitales Signal $u_{dig}$, welches nur die Werte Null und Eins annehmen kann, berechnet, das mit dem Signal $u_{fuz}$ verknüpft wird, um den Zusatzlenkwinkel $\Delta\delta_{Zus}$ zu bestimmen.

Im Rahmen umfangreicher Fahrversuche hat sich gezeigt, dass Lenkeingriffe mit betragsmäßig großen Zusatzlenkwinkeln $\Delta\delta_{Zus}$ von dem Fahrer 210 nicht toleriert werden, wenn er selbst gar nicht oder nur wenig über das Lenkrad in das Lenkgeschehen eingreift. Volle fahrdynamische Unterstützung seitens des Dynamikreglers muss dagegen in Fahrsituationen erfolgen, bei denen der Fahrer 210 erheblichen Lenkaufwand leistet. Um die externen Lenkeingriffe des Regelsystems im Hinblick hierauf für den Fahrer 210 komfortabel zu gestalten, werden die Lenkvorgaben des Fahrers 210 daher bei der Generierung des Zusatzlenkwinkels $\Delta\delta_{Zus}$ berücksichtigt.

Der Lenkaufwand ist hierbei durch den Betrag $|\delta_{Drv}|$ des von dem Fahrer 210 eingestellten Lenkwinkels $\delta_{drv}$ und dem Betrag $|\dot{\delta}_{Drv}|$ des von dem Fahrer 210 eingestellten Lenkwinkelgradienten $\dot{\delta}_{Drv}$ charakterisiert.

Ähnlich der Vorgehensweise bei der Anpassung der Stellgröße u an die Fahrzeuggeschwindigkeit $v_{Veh}$ erfolgt auch die Berechnung der Zwischengröße $u_{fuz}$ durch den Block 330 anhand einer Fuzzy-Regel. Sie lautet hier:

"WENN der Betrag $|\delta_{Drv}|$ des von dem Fahrer eingestellten Lenkwinkels $\delta_{drv}$ "klein" ist UND der Betrag $|\dot{\delta}_{Drv}|$ des von dem Fahrer eingestellten Lenkwinkelgradienten $\dot{\delta}_{Drv}$ "klein" ist, DANN ist auch die Größe $u_{fuz}$ "klein"."

Diese Regel formuliert kurz und prägnant die zuvor beschriebenen Notwendigkeiten für die betragsmäßige Bestimmung des Zusatzlenkwinkels $\Delta\delta_{Zus}$. Der linguistische Wert "klein" für die Beträge $|\delta_{Drv}|$ und $|\dot{\delta}_{Drv}|$ wird hierbei jeweils wiederum durch eine Fuzzy-Menge beschrieben.

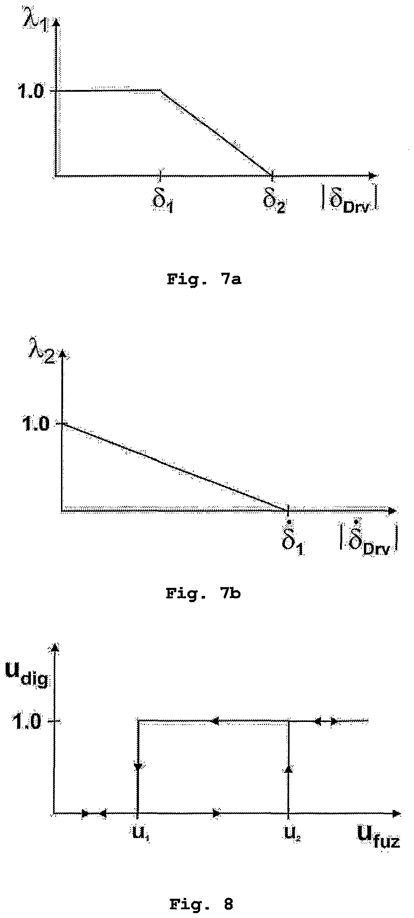

Die Zugehörigkeitsfunktion $\lambda_1$ der Menge "kleiner" Beträge $|\delta_{drv}|$ ist in dem Diagramm in der Figur 7a dargestellt. Das Diagramm in der Figur 7b zeigt die Zugehörigkeitsfunktion $\lambda_2$ der Menge "kleiner" Beträge $|\dot{\delta}_{Drv}|$.

Es handelt sich dabei um linksseitig berandete Zugehörigkeitsfunktionen: Ein von Null verschiedener Zugehörigkeitsgrad $\lambda_1$ zu der Menge "kleiner" Beträge

$|\delta_{Drv}|$ ergibt sich nur dann, wenn der Betrag $|\delta_{Drv}|$ des von dem Fahrer 210 eingestellten Lenkwinkels $\delta_{Drv}$ kleiner als ein Wert $\delta_2$ ist, und ein Zugehörigkeitsgrad von $\lambda_1 = 1$ liegt vor, wenn der Betrag $|\delta_{Drv}|$ des von dem Fahrer 210 eingestellten Lenkwinkels $\lambda_{Drv}$ kleiner als ein Wert $\delta_1$ ist. Die Parameter $\delta_1$ und $\delta_2$ nehmen beispielsweise Werte von 5° und 15° an.

Die Zugehörigkeitsfunktion $\lambda_2$ wird als linksseitig berandete dreiecksförmige Zugehörigkeitsfunktion angegeben. Ein von Null verschiedener Zugehörigkeitsgrad $\lambda_2$ ergibt sich nur dann, wenn der von dem Fahrer 210 eingestellte Lenkwinkelgradient $\dot{\delta}_{Drv}$ betragsmäßig kleiner als ein Wert $\dot{\delta}_1$ ist, und ein Zugehörigkeitsgrad von $\lambda_2 = 1$ liegt nur für $\dot{\delta}_{Drv} = 0$ vor .

Sind die Zugehörigkeitsgrade $\lambda_1$ und $\lambda_2$ durch den Block 330 festgestellt worden, wird im nächsten Schritt die UND-Operation der vorgenannten Regel nachgebildet. Dafür werden die Zugehörigkeitsgrade $\lambda_1$ und $\lambda_2$, wie es in der Fuzzy-Logik üblich ist, durch eine Minimum-Operation verknüpft. Es wird dabei die Größe $\lambda$ durch

$$\lambda = \min\{\lambda_1, \lambda_2\}$$

berechnet.

Liegt der Wert von $\lambda$ nahe dem Wert Eins, bedeutet das, dass der fahrerseitige Lenkaufwand gering ist und die Bedingungen für eine erhebliche Abschwächung des Stellsignals $u_v$ erfüllt sind. Bewegt sich der Wert von e dagegen um den Wert Null, leistet der Fahrer erheblichen Lenkaufwand, und der Zusatzlenkwinkel $\Delta\delta_{Zus}$ soll in vollem Maße aufgebracht werden.

Die Größe $u_{fuz}$ wird somit in der folgenden Weise berechnet:

$$u_{fuz} = u_v \cdot (1 - \lambda)$$

Zur Bestimmung des einzustellenden Zusatzlenkwinkels $\Delta\delta_{Zus}$ wird das Signal $u_{fuz}$ schließlich durch den Block 340 bearbeitet. Dieser bestimmt die Größe $u_{dig}$ anhand der in der Figur 8 dargestellten Hysteresekurve aus dem Signal $u_{fuz}$ und der Zusatzlenkwinkel $\Delta\delta_{zus}$ wird nachfolgend durch Multiplikation der Stellgröße $u_{fuz}$ mit der Größe $u_{dig}$ bestimmt. Dies wird von einem Multiplikator 350 vorgenommen.

Übersteigt das Eingangssignal $u_{fuz}$ des Blocks 340 einen Wert $u_2$, ist das Ausgangssignal $u_{dig} = 1$ und behält diesen Wert solange, bis $u_{fuz}$ kleiner als ein Wert $u_1$ wird.

Das Signal $u_{dig}$ stellt somit ein zusätzliches Anforderungssignal, ein sogenanntes Request-Flag dar, durch das eine zusätzliche Bewertung der Stellanforderungen vorgenommen wird. Insbesondere werden dabei sehr kleine Stellanforderungen, für die sich ein Wert von $u_{dig} = 0$ ergibt, hart weggeblendet und führen zu keinerlei Aktuatoraktivität innerhalb der Überlagerungslenkung 290.

Diese Maßnahme reduziert den Stellaufwand des Aktuators und hat bei Stellsystemen mit haptischen Rückwirkungen auf das Lenkrad den Vorteil, dass sich das Lenkgefühl für den Fahrer 210 erheblich verbessert. Kleine, für die Dynamik des Fahrzeugs 250 eher vernachlässigbare Zusatzlenkeingriffe werden völlig unterdrückt und somit von dem Fahrer nicht als störende Momentschwankungen am Lenkrad empfunden.

Der durch Multiplikation von $u_{dig}$ und $u_{fuz}$ berechnete Wert $\Delta\delta_{Zus}$ wird schließlich als Stellanforderung zu dem Aktuator der Überlagerungslenkung 290 gesendet. Er stellt damit die Ausgangsgröße der beschriebenen Vorrichtung dar.

Durch die von dem Regelsystem berechneten externen Lenkeingriffe wird der Fahrer 210 bei seiner Kursführungsaufgabe im unterkritischen Fahrbereich wirkungsvoll unterstützt. Die Agilität des Fahrzeugs wird erhöht und ein Überreißen der Lenkung bzw. bei Ausweichmanövern wird verhindert.

Durch die harmonische Abstimmung der einzelnen Regelungskomponenten und die Anpassung des Lenkeingriffs an die Fahrzeuggeschwindigkeit $v_{Veh}$ und insbesondere an die Aktivitäten des Fahrers 210 bleibt der erzeugte Zusatzlenkeingriff von dem Fahrer 210 unbemerkt und beeinträchtigt ihn nicht. Eine erhöhte Lenknervosität durch den Handlingregler wird zudem durch intelligente Aktivierungsmechanismen verhindert.

In kritischen Fahrsituationen können die erfindungsgemäßen Lenkeingriffe mit herkömmlichem Bremsen und Motoreingriffen eines ESP-Systems kombiniert werden, um diese besser bewältigen zu können als durch Bremsen- und Motoreingriffe allein.

Durch die Lenkeingriffe werden diese Eingriffe erst später notwendig.

Die Erfindung stellt somit ein vorteilhaftes, gierratenbasiertes Regelsystem bereit, mit dem anhand von Fahrervorgaben und der sensorisch erfassten Fahrzeugreaktion Zusatzlenkwinkel $\Delta\delta_{Zus}$ in unkritischen Fahrsituationen berechnet werden können, die das Fahrzeugfolgeverhalten für den Fahrer 210 spürbar verbessern. Die erfindungsgemäßen Vorteile beinhalten dabei sowohl eine Komforterhöhung, insbesondere eine Erhöhung der Agilität, als auch eine höhere Sicherheit für das Fahrzeug 250.

**Patentansprüche**

1. Verfahren zum Regeln der Fahrdynamik eines Fahrzeugs (250), bei dem eine Lenkbewegung nach Maßgabe einer Stellgröße (u) vorgenommen wird, wobei wenigstens ein Zugehörigkeitsgrad ($\lambda_1$, $\lambda_2$) eines erfassten Wertes ($\delta_{Drv}$) eines von einem Fahrer (210) eingestellten Lenkwinkels ($\delta_{Drv}$) und/oder eines von dem Fahrer (210) eingestellten Lenkwinkel-

gradienten ($\dot{\delta}_{Drv}$) zu einer vorgegebenen unscharfen Menge kleiner, vom Fahrer eingestellter Lenkwinkel ($\delta_{Drv}$) oder Lenkwinkelgradienten ($\dot{\delta}_{Drv}$) ermittelt wird, und ein Wert ($\Delta\delta_{Zus}$) der Stellgröße (u) in Abhängigkeit des Zugehörigkeitsgrades $\lambda_1, \lambda_2$) verändert wird
**dadurch gekennzeichnet,**
**dass** die Stellgröße in Abhängigkeit einer Abweichung zwischen einem Sollwert ($\dot{\psi}_M$) und einem erfassten Istwert ($\dot{\psi}$) einer Fahrzustandsgröße ($\dot{\psi}$) nach der Zeitfunktion

$$u = K \cdot e + T_d \cdot \dot{e}$$

berechnet wird, wobei e die zeitliche Ableitung der Abweichung e darstellt.

2. Verfahren nach einem oder mehreren der vorangegangenen Ansprüche
**dadurch gekennzeichnet,**
**dass** der Wert ($\Delta\delta_{Zus}$) der Stellgröße (u) in Abhängigkeit eines erfassten Wertes einer Fahrzeuggeschwindigkeit ($v_{Veh}$) verändert wird.

3. Verfahren nach einem oder mehreren der vorangegangenen Ansprüche
**dadurch gekennzeichnet,**
**dass** der Wert ($\Delta\delta_{Zus}$) der Stellgröße (u) in Abhängigkeit des Zugehörigkeitsgrades ($\lambda_v$) des erfassten Wertes ($v_{veh}$) der Fahrzeuggeschwindigkeit ($v_{veh}$) zu einer Menge "mittlerer" Geschwindigkeiten verändert wird.

4. Verfahren nach einem oder mehreren der vorangegangenen Ansprüche
**dadurch gekennzeichnet,**
**dass** die Lenkbewegung unterdrückt wird, wenn der erfasste Wert ($v_{Veh}$) der Fahrzeuggeschwindigkeit ($v_{Veh}$) unterhalb eines ersten Grenzwertes ($v_{low}$) oder oberhalb eines zweiten Grenzwerts ($v_{high}$) liegt.

5. Vorrichtung zum Regeln der Fahrdynamik eines Fahrzeugs (250), mit einer Regeleinheit (260), die aufgrund der Abweichung eines erfassten Istwerts ($\dot{\psi}$) einer Fahrzustandsgröße ($\dot{\psi}$) von einem vorgegebenen Sollwert ($\dot{\psi}_M$) eine Stellgröße (u) ermittelt, nach deren Maßgabe eine Lenkbewegung ausgeführt wird
und mit
einer Fuzzy-Logikeinheit (280) zum Ermitteln des Zugehörigkeitsgrades ($\lambda_1$) eines Wertes ($\delta_{Drv}$) eines von dem Fahrer (210) eingestellten Lenkwinkels ($\delta_{Drv}$) zu einer unscharfen Menge "kleiner" Lenkwinkel und eines Zugehörigkeitsgrades ($\lambda_2$) eines von dem Fahrer eingestellten Lenkwinkelgradienten ($\dot{\delta}_{Drv}$) zu einer Menge "kleiner" Lenkwinkelgradienten und zum Verändern eines Wertes ($\Delta\delta_{Zus}$) der

Stellgröße (u) anhand einer Verknüpfung der Zugehörigkeitsgrade ($\lambda_1, \lambda_2$) **dadurch gekennzeichnet,**
**dass** die Stellgröße in Abhängigkeit einer Abweichung zwischen einem Sollwert ($\dot{\psi}_M$) und einem erfassten Istwert ($\dot{\psi}$) einer Fahrzustandsgröße ($\dot{\psi}$) nach der Zeitfunktion

$$u = K \cdot e + T_d \cdot \dot{e}$$

berechnet wird, wobei e die zeitliche Ableitung der Abweichung e darstellt..

6. Vorrichtung nach Anspruch 5,
**dadurch gekennzeichnet,**
**dass** eine Logikeinheit (270) zum Ermitteln eines Zugehörigkeitsgrades ($\lambda_v$) eines erfassten Wertes ($v_{veh}$) eines Fahrzeuggeschwindigkeit ($v_{veh}$) zu einer unscharfen Menge "mittlerer" Geschwindigkeiten und zum Verändern des Wertes ($\Delta\delta_{Zus}$) der Stellgröße (u) in Abhängigkeit dieses Zugehörigkeitsgrades ($\lambda_v$).

**Claims**

1. Method for controlling the driving dynamics of a vehicle (250), in which a steering movement is performed in accordance with a manipulated variable (u), wherein at least one association level ($\lambda_1, \lambda_2$) of a detected value ($\delta_{Drv}$) of a steering angle ($\delta_{Drv}$) which is set by a driver (210) and/or of a steering angle gradient ($\dot{\delta}_{Drv}$) which is set by the driver (210) with a predefined fuzzy set of small steering angles ($\delta_{Drv}$) or steering angle gradients ($_{Drv}$) which are set by $\delta$he driver is determined, and a value ($\Delta\delta_{Zus}$) of the manipulated variable (u) is changed as a function of the association level ($\lambda_1, \lambda_2$), **characterized in that** the manipulated variable is calculated as a function of a deviation between a setpoint value ($\dot{\psi}_M$) and a detected actual value ($\dot{\psi}$) of a driving state variable ($\dot{\psi}$) according to the time function

$$u = K \cdot e + T_d \cdot \dot{e},$$

where e represents the time derivative of the deviation e.

2. Method according to one or more of the preceding claims,
**characterized in that** the value ($\Delta\delta_{Zus}$) of the manipulated variable (u) is changed as a function of a detected value of a vehicle velocity ($v_{veh}$).

3. Method according to one or more of the preceding claims,
**characterized in that** the value ($\Delta\delta_{Zus}$) of the ma-

nipulated variable (u) is changed as a function of the association level ($\lambda_v$) of the detected value ($v_{Veh}$) of the vehicle velocity ($v_{Veh}$) to form a set of "average" velocities.

4. Method according to one or more of the preceding claims,
   **characterized in that** the steering movement is suppressed if the detected value ($v_{Veh}$) of the vehicle velocity ($v_{Veh}$) is below a first limiting value ($v_{low}$) or above a second limiting value ($v_{high}$).

5. Device for controlling the driving dynamics of a vehicle (250), having a control unit (260) which determines a manipulated variable (u) on the basis of the deviation of a detected actual value ($\dot\psi$) of a driving state variable ($\dot\psi$) from a predefined setpoint value ($\dot\psi_M$), according to which manipulated variable (u) a steering movement is carried out, and having a fuzzy logic unit (280) for determining the association level ($\lambda_1$) of a value ($\delta_{Drv}$) of a steering angle ($\delta_{Drv}$) set by the driver (210) with respect to a fuzzy set of "small" steering angles, and for determining an association level ($\lambda_2$) of a steering angle gradient ($\dot\delta_{Drv}$) set by the driver with respect to a set of "small" steering angle gradients, and for changing a value ($\Delta\delta_{Zus}$) of the manipulated variable (u) on the basis of a logic connection of the association levels ($\lambda_1$, $\lambda_2$), **characterized in that** the manipulated variable is calculated as a function of a deviation between a setpoint value ($\dot\psi_M$) and a detected actual value ($\dot\psi$) of a driving state variable ($\dot\psi$) according to the time function

$$u = K \cdot e + T_d \cdot \dot{e},$$

where e represents the time derivative of the deviation e.

6. Device according to Claim 5,
   **characterized in that** a logic unit (270) for determining an association level ($\lambda_v$) of a detected value ($v_{Veh}$) of a vehicle velocity ($v_{Veh}$) with respect to a fuzzy set of "average" velocities and for changing the value ($\Delta\delta_{Zus}$) of the manipulated variable (u) as a function of this association level ($\lambda_v$).

**Revendications**

1. Procédé pour réguler la dynamique de conduite d'un véhicule (250), dans lequel un mouvement de braquage est effectué conformément à une grandeur de réglage (u), dans lequel on détermine au moins un degré d'appartenance ($\lambda_1$, $\lambda_2$) d'une valeur détectée ($\delta_{Drv}$) d'un angle de braquage ($\delta_{Drv}$) réglé par un conducteur (210) et/ou d'un gradient d'angle de braquage ($\dot\delta_{Drv}$) réglé par le conducteur (210) à une quantité imprécise prédéterminée d'angles de braquage ($\delta_{Drv}$) inférieurs réglés par le conducteur ou de gradients d'angle de braquage ($\dot\delta_{Drv}$) inférieurs, et une valeur ($\Delta\delta_{Zus}$) de la grandeur de réglage (u) est modifiée en fonction du degré d'appartenance ($\lambda_1$, $\lambda_2$),
   caractérisé et ce que la grandeur de réglage est calculée en fonction d'un écart entre une valeur nominale ($\dot\psi_M$) et une valeur réelle détectée ($\dot\psi$) d'une grandeur d'état de conduite ($\dot\psi$) conformément à la fonction du temps suivante :

$$u = K \cdot e + T_d \cdot \dot{e},$$

où $\dot{e}$ représente la dérivée temporelle de l'écart e.

2. Procédé selon l'une ou plusieurs des revendications précédentes, caractérisé et ce que la valeur ($\Delta\delta_{Zus}$) de la grandeur de réglage (u) est modifiée en fonction d'une valeur détectée d'une vitesse du véhicule ($V_{veh}$).

3. Procédé selon l'une ou plusieurs des revendications précédentes, caractérisé et ce que la valeur ($\Delta\delta_{Zus}$) de la grandeur de réglage (u) est modifiée en une quantité appelée vitesses "moyennes" en fonction du degré d'appartenance ($\lambda_v$) de la valeur détectée ($V_{veh}$) de la vitesse du véhicule ($V_{veh}$).

4. Procédé selon l'une ou plusieurs des revendications précédentes, **caractérisé en ce que** le mouvement de braquage est supprimé lorsque la valeur détectée ($V_{veh}$) de la vitesse du véhicule ($V_{veh}$) se situe en-dessous d'une première valeur limite ($V_{low}$) ou au-dessus d'une deuxième valeur limite ($V_{high}$).

5. Dispositif de régulation de la dynamique de conduite d'un véhicule (250), comportant une unité de régulation (260) qui détermine une grandeur de réglage (u) sur la base de l'écart d'une valeur réelle détectée ($\dot\psi$) d'une grandeur d'état de conduite ($\dot\psi$) par rapport à une valeur nominale prédéterminée ($\dot\psi_M$), conformément à laquelle un mouvement de braquage est réalisé et comportant une unité à logique floue (280) destinée à déterminer le degré d'appartenance ($\lambda_1$) d'une valeur ($\delta_{Drv}$) d'un angle de braquage ($\delta_{Drv}$) réglé par le conducteur (210) à une quantité imprécise d'angles de braquage "inférieurs" et un degré d'appartenance ($\lambda_2$) d'un gradient d'angle de braquage ($\dot\delta_{Drv}$) réglé par le conducteur à une quantité de gradients d'angle de braquage "inférieurs" et pour modifier une valeur ($\Delta\delta_{Zus}$) de la grandeur de réglage (u) sur la base d'une combinaison des degrés d'appartenance ($\lambda_1$, $\lambda_2$), **caractérisé en ce que** la grandeur de réglage est calculé en fonction d'un écart entre une valeur nominale ($\dot\psi_M$) et une valeur réelle

détectée ($\dot{\psi}$) d'une grandeur d'état de conduite ($\dot{\psi}$) conformément à la fonction du temps suivante :

$$u = K \cdot e + T_d \cdot \dot{e},$$

où $\dot{e}$ représente la dérivée temporelle de l'écart e.

6.  Dispositif selon la revendication 5, **caractérisé par** une logique (270) destinée à déterminer un degré d'appartenance ($\lambda_v$) d'une valeur détectée ($V_{veh}$) d'une vitesse du véhicule ($V_{veh}$) à une quantité imprécise de vitesses "moyennes" et à modifier la valeur ($\Delta\delta_{Zus}$) de la grandeur de réglage (u) en fonction dudit degré d'appartenance ($\lambda_v$).

Figuren:

Fig. 1 (Stand der Technik)

Fig. 2

Fig. 3a

Fig. 3b

**310**

$\dot{\psi}_M$ → ○ e → | 260 | u → | 270 | $u_v$ → | 280 | $\Delta\delta_{Zus}$ → ○ → $\delta_{Whl}$

$\dot{\psi}$ ↑ −

↑ RP    ↑ $v_{Veh}$    ↑ $\delta_{Drv}$

$\delta_{VARI}$ ↑

| 300 |

↑ $\delta_{Drv}$

**Fig. 4**

$\lambda_V$

1.0

$V_{low}$  $V_{n1}$  $V_{n2}$  $V_{high}$  $V_{Veh}$

**Fig. 5**

**350**

$u_v$ → | 330 | $u_{fuz}$ → ● → | 340 | $u_{dig}$ → ⊗ → $\Delta\delta_{Zus}$

↑ $\delta_{Drv}$

**Fig.6**

Fig. 7a

Fig. 7b

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4120069 A1
- DE 4419049 A1
- DE 10130659 A1